# EUROPEAN PATENT APPLICATION

(11) **EP 2 869 486 A1**
(43) Date of publication of application: **06.05.2015**
(21) Application number: 13809216.8
(22) Date of filing: 14.06.2013
(51) Int. Cl.: H04J 11/00

(54) **RECEIVING DEVICE, METHOD, AND PROGRAM**

(30) Priority: 27.06.2012 JP 2012143668
(71) Applicant: Sony Corporation, Tokyo 108-0075 (JP)
(72) Inventor: KOBAYASHI Kenichi, Tokyo 108-0075 (JP)
(74) Representative: Jackson, Jonathan Andrew
(86) International application number: PCT/JP2013/066436
(87) International publication number: WO 2014/002791

(57) **Abstract**

There is provided a receiving device including a gain supplying unit that supplies a gain for adjusting power of an intermediate frequency OFDM signal acquired from a broadcast signal received by a tuner, the broadcast signal conforming with the DVB-T2 standard and having a plurality of profiles mixed, a position detecting unit that detects a head position of a frame corresponding to each of the plurality of profiles, and a time constant changing unit that changes, in accordance with a profile of the frame, a time constant to specify a time interval at which the gain supplying unit calculates the gain based on power of the intermediate frequency OFDM signal outputted from the tuner when a head position of the frame is detected.

## Description

### Technical Field

The present technology relates to a receiving device, a method and a program, and in particular, relates to a receiving device, method and program that make it possible to receive quickly a desired profile from a DVB-T2 broadcast signal in which different profiles exist in a mixed manner and to perform demodulation.

### Background Art

As a standard of terrestrial digital broadcasting, formulation of a second generation European terrestrial digital broadcasting standard (DVB-T2 standard) has been promoted (refer to Non-Patent Literature 1), for example.

In the terrestrial digital broadcasting which conforms with this DVB-T2 standard, a modulation system referred to as orthogonal frequency division multiplexing (OFDM) is used.

Data transmission on the basis of the OFDM system is performed by using many orthogonal sub-carriers in a transmission band, and allocating data to an amplitude or phase of each sub-carrier. The data is transmitted in units of a symbol referred to as an OFDM symbol. Inverse Fast Fourier Transform (IFFT) is performed on the OFDM symbol at the time of transmission.

In the DVB-T2 standard, a frame referred to as a T2 frame is defined, and data is transmitted in units of the T2 frame. Then, in the DVB-T2 standard, it has become possible that a signal referred to as a future extension frame (FEF) is multiplexed in a time direction between transmission T2 frames, and is transmitted.

The T2 frame includes a preamble signal referred to as P1, and in the preamble signal, information for discriminating whether the frame is the T2 frame or the FEF, and information necessary for processing such as demodulation of the OFDM signal are included.

Moreover, a preamble signal referred to as P2 is included in the T2 frame in addition to the P1, and information indicating a length, an interval and a type, etc., of the FEF, and information necessary for demodulation processing of the T2 frame are included in the P2.

For example, in a receiving device, by acquiring information related to the FEF included in the P1 and P2, it is possible to extract only the T2 frame to perform demodulation, and it is possible to exclude an influence of the FEF to enhance a demodulation performance.

Since there is no specification with respect to specific contents of a signal included in the FEF in the DVB-T2 standard, what kind of signal is transmitted in the FEF portion is hardly predicted in a receiver.

When the receiver is provided with automatic gain control (AGC ) so as to keep constant a power of the inputted OFDM signal, for example, the AGC may operate in the FEF section and the gain may follow it to affect a signal reception in the T2 section. Therefore, in the DVB-T2 standard, it is recommended to stop the AGC in the FEF section, and to hold the gain to be constant.

### Citation List

### Non-Patent Literature

Non-Patent Literature 1: DVB BlueBook A122 Rev.1, Frame structure channel coding and modulation for a second generation digital terrestrial television broadcasting system (DVB-T2), September 1, Heisei 20, DVB homepage [searched, June 8, Heisei 24], the Internet <URL:http://www.dvb.org/technology/>.

### Summary of Invention

### Technical Problem

However, in v1.3.1 of the DVB-T2 standard, a profile for a mobile terminal referred to as T2-Lite has been added. The T2-Lite has become a system where a conventional T2 parameter is restricted with the aim of receiver cost reduction, and is a system which is compatible with a conventional receiver.

It is specified that this T2-Lite profile is transmitted as the FEF. Therefore, in the future, in the terrestrial digital broadcasting which conforms with the DVB-T2 standard, a signal in which the T2 profile and the T2-Lite profile exist in a mixed manner may be transmitted.

In this way, when the T2 and the T2-Lite exist in a mixed manner, a receiver which performs reception and demodulation of the T2 profile will come to carry out processing while regarding a frame of the T2-Lite profile (T2-Lite frame) as the FEF, and a receiver which performs reception and demodulation of the T2-Lite profile will come to carry out processing while regarding the T2-frame as the FEF.

In addition, when the T2 and the T2-Lite exist in a mixed manner in this way, a case such that a long T2 section and a very short T2-Lite section appear alternately will be considered.

In such a case, when the T2-Lite is received and demodulated, if an operation such as stopping the AGC in the FEF section (section where the T2 frames continue) as described above is performed, the AGC will come to operate only in the short T2-Lite section, and therefore, time will be needed by the time the gain converges on a suitable value. As a result, the reception and demodulation of the T2-Lite profile will come to take long time as compared with the reception and demodulation of the T2 profile.

The present technology is disclosed in view of such situations, and makes it possible to receive a desired profile quickly from the DVB-T2 broadcast signal in which different profiles exist in a mixed manner and to perform demodulation.

### Solution to Problem

According to an aspect of the present disclosure, there is provided a receiving device including a gain supplying unit that supplies a gain for adjusting power of an intermediate frequency OFDM signal acquired from a broadcast signal received by a tuner, the broadcast signal conforming with the DVB-T2 standard and having a plurality of profiles mixed, a position detecting unit that detects a head position of a frame corresponding to each of the plurality of profiles, and a time constant changing unit that changes, in accordance with a profile of the frame, a time constant to specify a time interval at which the gain supplying unit calculates the gain based on power of the intermediate frequency OFDM signal outputted from the tuner when a head position of the frame is detected.

A profile determination unit that determines whether or not a frame in which the head position has been detected is a frame corresponding to a profile from which decoded data is to be outputted may be further included. In a case where a frame in which the head position has been detected is determined to be a frame corresponding to a profile from which decoded data is to be outputted, the time constant changing unit changes a time constant of the gain supplying unit into a time constant to shorten a time interval at which the gain is calculated.

A gain holding control unit that carries out control so that a gain supplied from the gain supplying unit is held constant in a case where the frame in which the head position has been detected is determined not to be a frame corresponding to a profile from which decoded data is to be outputted may be further included.

A profile determination unit that determines whether or not a frame in which the head position has been detected is a frame corresponding to a profile from which decoded data is to be outputted, and an initial value setting unit that sets an initial value of a gain supplied from the gain supplying unit to a prescribed value determined in advance in a case where a frame in which the head position has been detected is determined to be a frame corresponding to a profile from which decoded data is to be outputted may be further included.

The initial gain setting unit sets a value suitable for demodulation of a signal of a profile from which the decoded data is to be outputted as an initial value of the gain.

According to an aspect of the present disclosure, there is provided a receiving method of a receiving device having a gain supplying unit that supplies a gain for adjusting power of an intermediate frequency OFDM signal acquired from a broadcast signal received by a tuner, the broadcast signal conforming with the DVB-T2 standard and having a plurality of profiles mixed, the method including detecting a head position of a frame corresponding to each of the plurality of profiles, and changing, in accordance with a profile of the frame, a time constant to specify a time interval at which the gain supplying unit calculates the gain based on power of the intermediate frequency OFDM signal outputted from the tuner when a head position of the frame is detected.

According to an aspect of the present disclosure, there is provided a program for causing a computer to function as a gain supplying unit that supplies a gain for adjusting power of an intermediate frequency OFDM signal acquired from a broadcast signal received by a tuner, the broadcast signal conforming with the DVB-T2 standard and having a plurality of profiles mixed, a position detecting unit that detects a head position of a frame corresponding to each of the plurality of profiles, and a time constant changing unit that changes, in accordance with a profile of the frame, a time constant to specify a time interval at which the gain supplying unit calculates the gain based on power of the intermediate frequency OFDM signal outputted from the tuner when a head position of the frame is detected.

In an aspect of the present technology, supplied is a gain for adjusting a power of an intermediate frequency OFDM signal acquired from the broadcast signal which conforms with the DVB-T2 standard and has a plurality of profiles mixed and is received by a tuner; a head position of a frame corresponding to each of the plurality of profiles is detected; and when the head position of the frame is detected, a time constant to specify a time interval at which the gain is calculated is changed according to the profile of the frame based on a power of the intermediate frequency OFDM signal outputted from the tuner.

### Advantageous Effects of Invention

According to the present technology, a desired profile can be received quickly from the DVB-T2 broadcast signal in which different profiles exist in a mixed manner and demodulated.

### Brief Description of Drawings

[FIG. 1] FIG. 1 illustrates a configuration example of a broadcast signal specified in the DVB-T2 standard;
[FIG. 2] FIG. 2 illustrates S1 and S2 which are included in P1;
[FIG. 3] FIG. 3 illustrates a combination pattern of information of the S1 and S2;
[FIG. 4] FIG. 4 illustrates a relation between a transmission signal and a gain;
[FIG. 5] FIG. 5 illustrates each waveform at the time of stopping AGC in the FEF section and holding a gain to be constant;
[FIG. 6] FIG. 6 illustrates combinations of profiles of the broadcast signal of a terrestrial digital broadcasting which conforms with the DVB-T2 standard;
[FIG. 7] FIG. 7 illustrates an example in a case where a plurality of profiles exists in a mixed manner;
[FIG. 8] FIG. 8 illustrates each waveform at the time of stopping AGC in the FEF section and holding a gain to be constant when a plurality of profiles exists in a mixed manner;
[FIG. 9] FIG. 9 is a block diagram illustrating a configuration example according to an embodiment of the receiving device to which the present technology is applied;
[FIG. 10] FIG. 10 is a block diagram illustrating a detailed configuration example of a frame synchronization unit of FIG. 9;
[FIG. 11] FIG. 11 illustrating an example of a gain set by the transmission signal and the AGC in a case where the present technology is applied;
[FIG. 12] FIG. 12 is a block diagram illustrating another detailed configuration example of the frame synchronization unit of FIG. 9;
[FIG. 13] FIG. 13 illustrates another example of the gain set by the transmission signal and the AGC in the case where the present technology is applied;
[FIG. 14] FIG. 14 illustrates still another example of the gain set by the transmission signal and the AGC in the case where the present technology is applied;
[FIG. 15] FIG. 15 is a flow chart illustrating an example of reception processing for every profile;
[FIG. 16] FIG. 16 is a flow chart illustrating another example of the reception processing for every profile;
[FIG. 17] FIG. 17 is a flow chart illustrating still another example of the reception processing for every profile; and
[FIG. 18] FIG. 18 is a block diagram illustrating a configuration example of a personal computer.

### Description of Embodiments

Hereinafter, preferred embodiments of the present invention will be described in detail with reference to the appended drawings. Note that, in this specification and the drawings, elements that have substantially the same function and structure are denoted with the same reference signs, and repeated explanation is omitted.

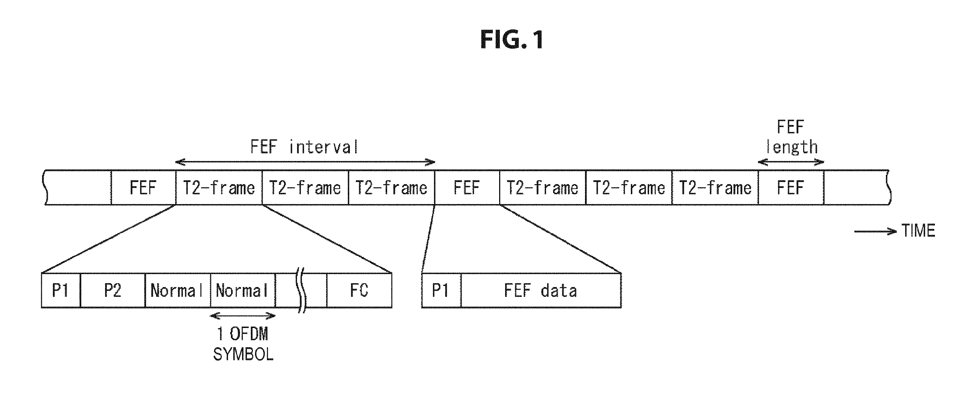

FIG. 1 illustrates a configuration example of a broadcast signal specified in a second generation European terrestrial digital broadcast standard (DVB-T2 standard).

In terrestrial digital broadcasting conforming with the DVB-T2 standard, a modulation system referred to as orthogonal frequency division multiplexing (OFDM) is used.

Data transmission on the basis of the OFDM system is performed by using a large number of orthogonal sub-carriers in a transmission band and by allocating data to an amplitude or phase of each sub-carrier. Data are transmitted in units of a symbol referred to as an OFDM symbol. Inverse Fast Fourier Transform (IFFT) is performed on the OFDM symbol at the time of transmission.

In the DVB-T2 standard, a frame referred to as a T2 frame is defined, and data are transmitted in units of the T2 frame. Then, in the DVB-T2 standard, it has become possible that a signal referred to as future extension frame (FEF) is multiplexed in time direction between transmission T2 frames and is transmitted.

In an example of FIG. 1, three T2 frames and one FEF are transmitted periodically.

In the T2 frame, a preamble signal referred to as P1 is included, and in the preamble signal, information for discriminating whether the frame is the T2 frame or the FEF and information necessary for processing of demodulation, etc., of an OFDM signal are included. Note that, the P1 is included also in the FEF.

In addition, in the T2 frame, a preamble signal referred to as P2 in addition to the P1 is included, and in the P2, information denoting a length of the FEF (FEF length of FIG. 1), an interval (FEF interval of FIG. 1) and a type, etc., and information necessary for demodulation processing of the T2 frame are included.

In the P1, discrimination information for discriminating whether the frame is the T2 frame or the FEF is signaled (Signaling). Therefore, a receiving device which receives the T2 frame and a receiving device which receives the FEF can extract and demodulate the T2 frame and the FEF by acquiring the information included in the P1.

In addition, in the P1, if the frame is the T2 frame, information necessary for demodulation processing, such as an FFT size when performing an FFT operation of a symbol other than the P1 (the number of samples (symbols) to be subjected to a single FFT operation) is further signaled. That is, when the frame is the T2 frame, because the P1 includes a transmission method and the FFT size, etc., which are necessary for demodulation of the P2, it is necessary to demodulate the P1 for demodulating the P2.

The P1 signaling includes portions referred to as S1 and S2, and the S1 includes three bits, and the S2 includes four bits.

The T2 frame further has the P2 symbol, a symbol referred to as Normal and a symbol referred to as FC (Frame Closing) in order, following the P1 symbol.

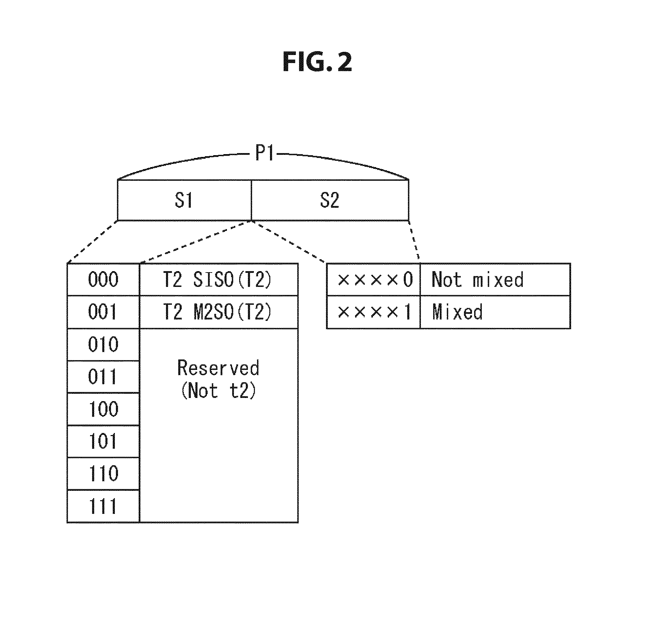

With reference to FIG. 2, the S1 and the S2 which are included in the P1 will be described. As described above, the P1 includes seven bits, and includes the S1 and the S2.

Since the S1 includes three bits, there are "000", "001", "010", "011", "100", "101", "110" and "111" as values which the S1 can take.

When the S1 is "000", it is denoted that the frame is T2 single input single output (SISO), and is the T2 frame. When the S1 is "001", it is denoted that the frame is T2 multiple input single output (MISO), and is the T2 frame. When the S1 is "010", "011", "100", "101", "110" or "111", because being Reserved (reserved), these values are values whose use is not determined. When the S1 is one of these values, it can be recognized in a receiving device side that the frame is not the T2 frame at least.

For example, when there is a possibility that a signal in which the T2 frame and the FEF are multiplexed as illustrated in FIG. 1 is received, it is turned out by interpreting the S1 on the receiving device side that when the S1 included in the P1 is "000" or "001", the frame is the T2 frame, and when the S1 has the other value, the frame is the FEF.

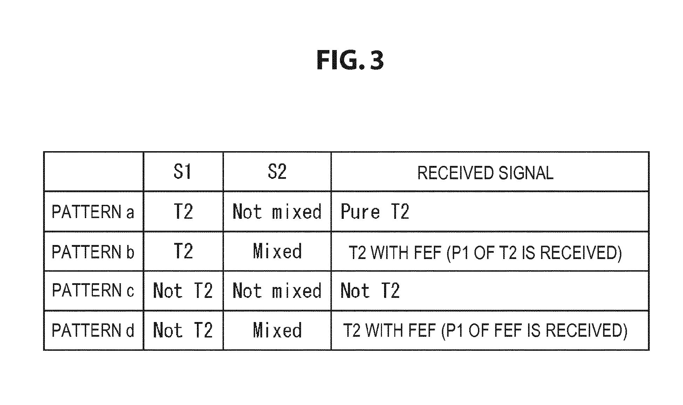

The S2 included in the P1 includes four bits. Among four bits, three bits other than least significant bit (LSB) are indicated by x in FIG. 3 since a value denoting FET SIZE is indicated therein. When the LSB of the S2 is "0", it is denoted that the received signal is "Not Mixed". "Not Mixed" means a case where the signal has the T2 frame only or the FEF only, and denotes the signal where different frames are not multiplexed.

When the LSB of the S2 is "1", it is denoted that the received signal is "Mixed". "Mixed" denotes the signal where different frames such as the T2 frame and the FEF are multiplexed.

Such information is included in each of the S1 and the S2. Therefore, with respect to information combinations of the S1 and the S2, there are patterns as illustrated in FIG. 3, and it can be specified what kind of signal (frame) is a signal received by each pattern.

A pattern a is a pattern where it is turned out that since the S1 is "000" or "001", the received signal is the T2 frame, and since the S2 is "xxx0", different frames are not included in the signal which has been received (Not Mixed). In the case of the pattern a, a signal received is a signal (Pure T2) in which the T2 frame only is included, and the receiving device performs processing suitable for the pattern a.

A pattern b is a pattern where it is turned out that since the S 1 is "000" or "001", the received signal is the T2 frame, and since the S2 is "xxx1", different frames are included in the signal which has been received (Mixed). In addition, a situation like this is a situation where it is also turned out that a frame to be processed is the T2 frame, and the P1 included in the T2 frame is processed. In the case of such pattern b, a signal received is a signal (T2 with the FEF) in which the T2 frame and the FEF frame are included, and the receiving device performs processing suitable for the pattern b.

A pattern c is a pattern where it is turned out that since the S 1 is other than "000" and "001", the received signal is other than the T2 frame (Not T2), and since the S2 is "xxx0", different frames are not included in the signal which has been received (Not Mixed). In the case of the pattern c, a signal received is a signal (Not T2) in which only FEF is included, and therefore, the receiving device performs processing suitable for the pattern c.

A pattern d is a situation where it is turned out that since the S 1 is other than "000" and "001", the received signal is other than the T2 frame (Not T2), and since the S2 is "xxx1", different frames are included in the signal which has been received (Mixed). In addition, a situation like this is a situation where it is also turned out that a frame to be processed is the FEF, and the P1 included in the FEF is processed. In the case of such pattern d, a signal received is a signal (T2 with the FEF) in which the T2 frame and the FEF frame are included, and therefore, the receiving device performs processing suitable for the pattern d.

In this way, by decoding the preamble signal P1 included in the T2 frame and the FEF, characteristics (patterns a to d) of the received signal can be known.

The receiving device which receives the T2 frame is configured to be able to extract and demodulate the T2 frame by acquiring information on the FEF included in the P1 and the P2, and to be able to exclude an influence from the FEF to improve a demodulation performance.

Since there is no specification with respect to specific contents of a signal included in the FEF in the DVB-T2 standard, what kind of signal is transmitted in the FEF portion is hardly predicted in a receiver.

When the receiver is provided with a gain control mechanism (Automatic Gain Control (AGC)) so as to keep constant a power of an inputted OFDM signal, for example, the AGC operates and the gain follows it in the FEF section, and signal reception in the T2 section may be affected.

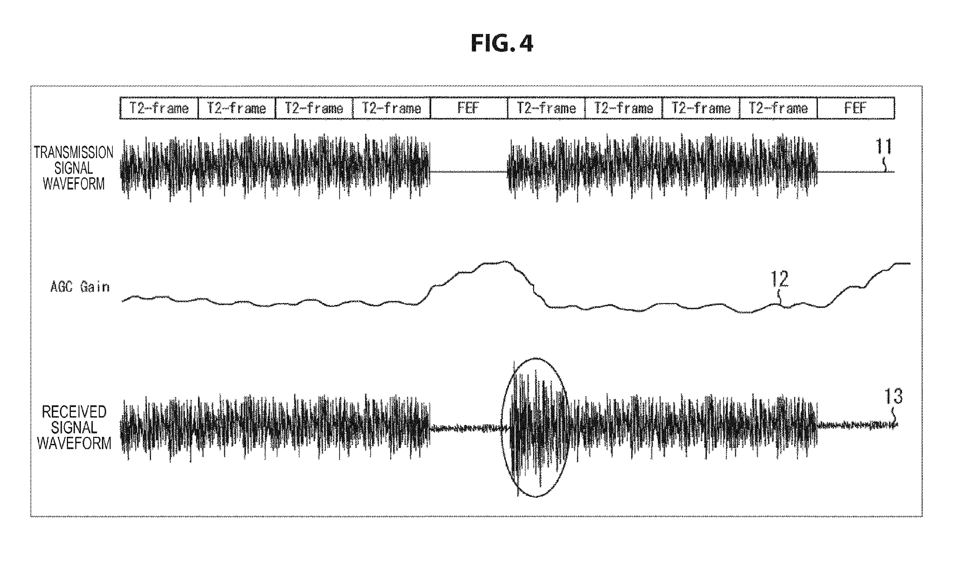

For example, as illustrated in FIG. 4, an example of a broadcast signal in which four T2 frames and one FEF are transmitted periodically is considered. Note that, each of small rectangles illustrated in the top in FIG. 4 denotes the frame of the broadcast signal which conforms with the DVB-T2 standard.

In FIG. 4, a line 11 indicates a waveform of the transmission signal (broadcast signal) transmitted to the receiving device from a broadcasting station. A line 12 indicates a waveform of a gain value set by the AGC of the receiving device. A line 13 indicates a waveform of the received signal where the transmission signal is received by the receiving device and the received signal is multiplied by the gain.

These signals, in which the horizontal axis represents time, are made to be waveforms synchronized with a time denoted by a rectangle indicating the T2 frame or the FEF illustrated in the top in FIG. 4. Note that, in the broadcast signal, a time section in which the T2 frames exist in succession is referred to as a T2 section, and a time section in which the FEF exists is referred to as a FEF section.

In an example of FIG. 4, a transmission signal whose waveform amplitude mostly disappears in the FEF section is illustrated for simplification. That is, as for the broadcast signal, a signal power in the FEF section is assumed to be approximately zero.

Because the AGC operates so as to set a gain having a magnitude in accordance with a magnitude of waveform amplitude, when the FEF section is started, the line 12 inclines in an upper right direction. In addition, when the T2 section is started again after the FEF section has been completed, the line 12 inclines in a lower right direction.

By being multiplied by the gain illustrated in the line 12, the amplitude of the waveform (a portion surrounded with an ellipse in FIG. 4) when the T2 section is started again after the FEF section has been completed will become extremely large in the line 13.

Therefore, in the DVB-T2 standard, it is recommended that in the FEF section, the AGC is made to be stopped, and a gain is made to be held constant.

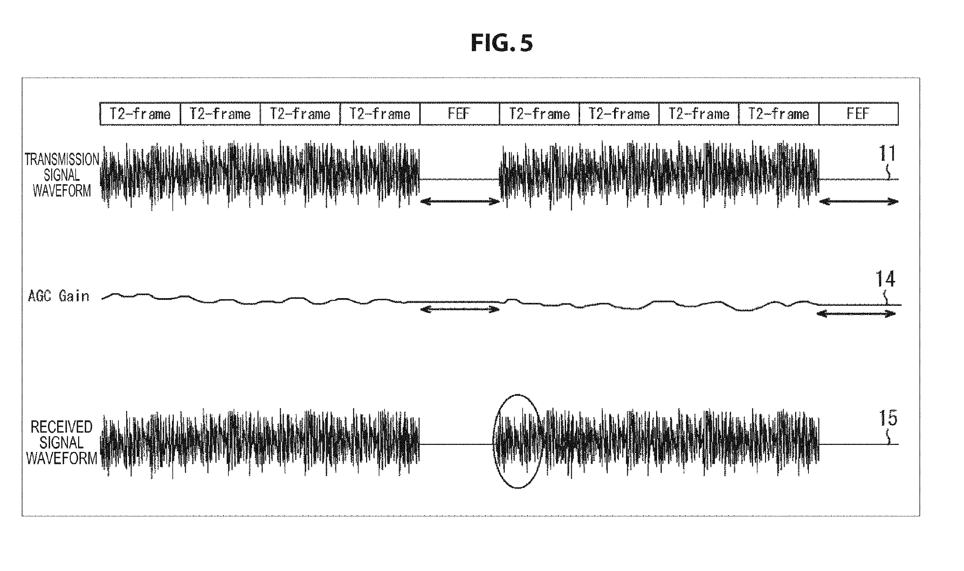

FIG. 5, in a case where the same transmission signal as FIG. 4 is received in the receiving device, illustrates each waveform when the AGC is made to be stopped in the FEF section and a gain is made to be held constant.

In FIG. 5, the waveform of the transmission signal indicated by the line 11 is the same as that of FIG. 4. On the other hand, a line 14 which is a waveform of a gain value set by the AGC is made to be a waveform different from the line 12 of FIG. 4, and a line 15 indicating a waveform of the received signal is also made to be a waveform different from the line 13 of FIG. 4.

That is, the line 14 of FIG. 5 is made to be a straight line which is horizontal in the FEF section. This is because a gain calculation operation of the AGC is stopped and a gain value is held constant, in the FEF section.

By being multiplied by the gain illustrated in the line 14, the amplitude of the waveform (a portion surrounded with an ellipse in FIG. 5) when the T2 section is started again after the FEF section has been completed will not become extremely large in the line 15.

In this way, the AGC is made to be stopped in the FEF section, and a gain is made to be held constant, and thereby, an influence of the signal in the FEF section on the signal reception in the T2 section can be excluded.

By the way, in the DVB-T2 standard v1.3.1, a profile for a mobile terminal referred to as T2-Lite has been added. The T2-Lite has become a method in which conventional T2 parameters are restricted with the aim of cost reduction of a receiving device, and is a method compatible with a conventional receiving device.

It has been specified that this T2-Lite profile is transmitted as the FEF. Therefore, in the future, in the terrestrial digital broadcasting which conforms with the DVB-T2 standard, a signal in which the T2 profile and the T2-Lite profile exist in a mixed manner may be transmitted.

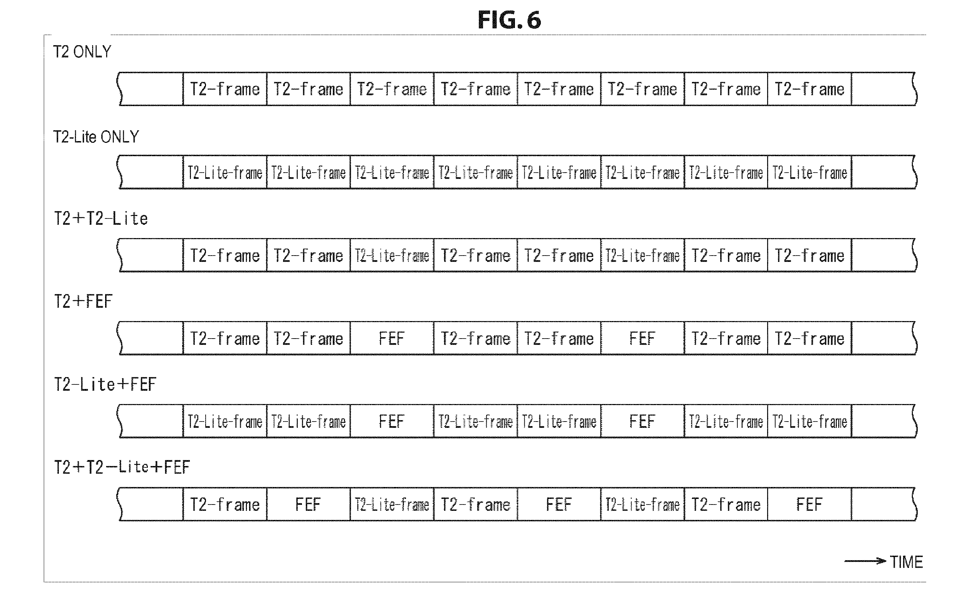

FIG. 6 illustrates combinations of profiles of the broadcast signal of the terrestrial digital broadcasting which conforms with the DVB-T2 standard.

The top of FIG. 6 illustrates an example of the broadcast signal including the T2 frame only. The second from the top in FIG. 6 illustrates an example of the broadcast signal including the T2-Lite frame only. The third from the top in FIG. 6 illustrates an example of the broadcast signal including the T2 frame and the T2-Lite frame. The fourth from the top in FIG. 6 illustrates an example of a case where the broadcast signal includes the T2 frame and the FEF, and the T2 frames exist more. The fifth from the top (second from the bottom) in FIG. 6 illustrates an example of a case where the broadcast signal includes the T2 frame and the FEF, and the T2-Lite frames exist more. The bottom in FIG. 6 illustrates an example of the broadcast signal including the T2 frame, the T2-Lite frame and the FEF.

Note that, each of small rectangles in FIG. 6 denotes the frame of the broadcast signal which conforms with the DVB-T2 standard.

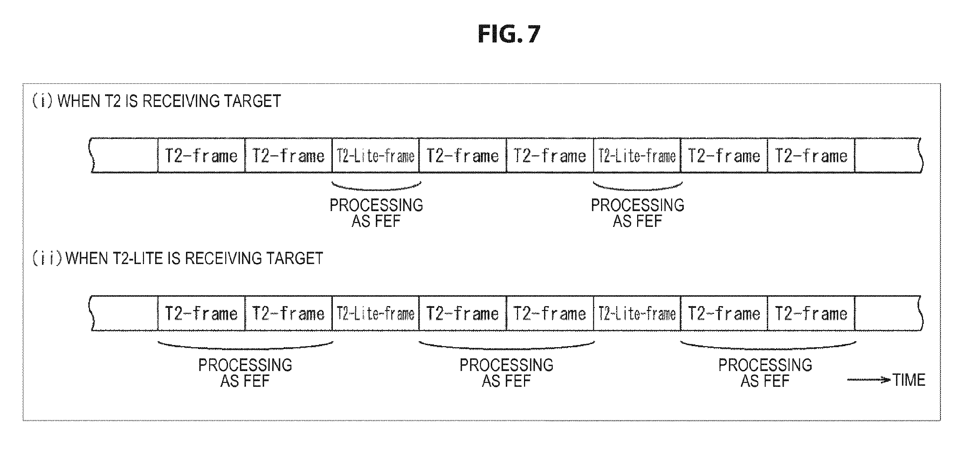

When the T2 frame and the T2-Lite frame exist in a mixed manner, the receiving device which performs reception and demodulation of the T2 profile will carry out processing while regarding the T2-Lite frame as the FEF as illustrated in an upper side in FIG. 7, for example. In addition, the receiving device which performs reception and demodulation of the T2-Lite profile will carry out processing while regarding the T2 frame as the FEF as illustrated in an lower side in FIG. 7, for example.

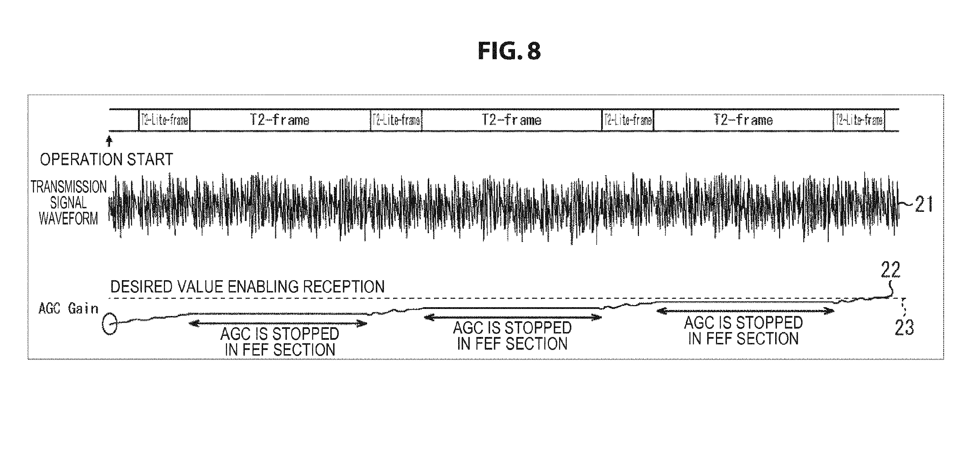

Now, when the T2 frame and the T2-Lite frame exist in a mixed manner and the T2 section is very long compared with the T2-Lite section, a case where the receiving device performs reception and demodulation of the T2-Lite profile is considered. FIG. 8 illustrates a transmission signal and a gain set by the AGC at this time. Note that, each of small rectangles illustrated in the top in FIG. 8 denotes the frame of the broadcast signal which conforms with the DVB-T2 standard.

In FIG. 8, a line 21 indicates a waveform of the transmission signal (broadcast signal) transmitted to the receiving device from the broadcasting station. A line 22 illustrates a waveform of a gain value set by the AGC of the receiving device. A dotted line 23 indicates a gain value suitable for performing reception and demodulation of the T2-Lite frame in the broadcast signal.

These waveforms, in which the horizontal axis represents time, are made to be waveforms synchronized with a time denoted by a rectangle indicating the T2 frame or the FEF illustrated in the top in FIG. 8.

As described above, when the T2 frame and the T2-Lite frame exist in a mixed manner, the receiving device which performs reception and demodulation of the T2-Lite profile will carry out processing while regarding the T2 frame as the FEF.

As illustrated in FIG. 8, when the T2 section is very long compared with the T2-Lite section, a considerably large section in the broadcast signal is regarded as the FEF, and a setting-operation of the AGC is stopped during the period, and a gain value is held constant. Therefore, the line 22, although gradually rising after an operation start of the AGC, becomes a horizontal straight line in the T2 section. Then, in this example, the line 22 intersects the dotted line 23 finally in the fourth T2-Lite section, and a gain value suitable for performing reception and demodulation is set.

In this way, when the T2 frame and the T2-Lite frame exist in a mixed manner, time will be taken until a gain is converged on a suitable value in a conventional technology. As a result, the reception and demodulation of the T2-Lite profile will need a long time compared with the reception and demodulation of the T2 profile.

Then, in the present technology, a gain suitable for the reception and demodulation of desired profiles is made to be set promptly.

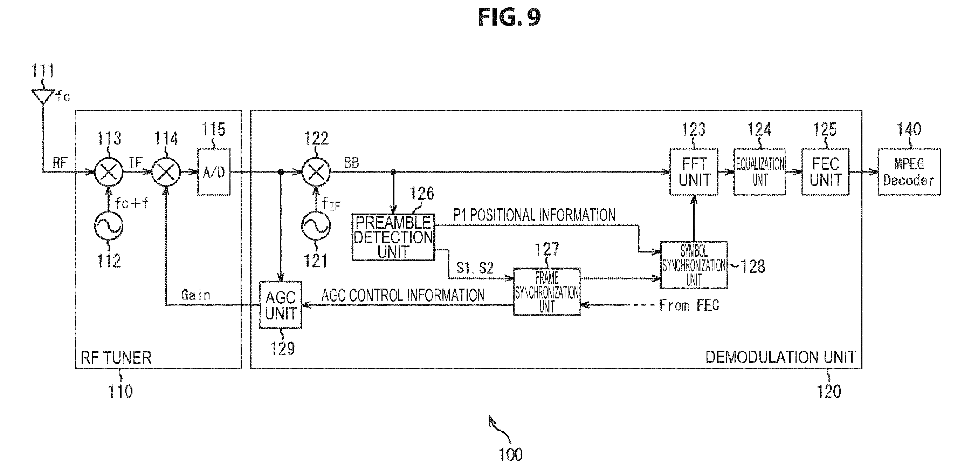

FIG. 9 is a block diagram illustrating a configuration example of the receiving device to which the present technology is applied. A receiving device 100 receives and demodulates a broadcast signal which conforms with the DVB-T2.

The receiving device 100 illustrated in FIG. 9 includes an RF tuner 110, a demodulation unit 120 and an MPEG decoder 140.

The RF tuner 110 has a local oscillator 112, a mixer 113, an IF amplifier 114 and an A/D converter 115.

The mixer 113 extracts a frequency component corresponding to a selection channel from a high frequency signal (RF signal) as the broadcast signal inputted via an antenna 111, converts the frequency component into an OFDM signal (IF signal) of an intermediate frequency, and outputs the OFDM signal to the demodulation unit 120. Note that, the IF amplifier 114 amplifies the IF signal in accordance with a gain fed back from an AGC unit 129 of the demodulation unit 120.

The demodulation unit 120 has a local oscillator 121, a mixer 122, an FET unit 123, an equalization unit 124, an FEC unit 125, a preamble detection unit 126, a frame synchronization unit 127, a symbol synchronization unit 128 and an AGC unit 129.

The mixer 122 down-converts the IF signal inputted from the RF tuner 110 into a baseband signal (BB), and outputs the baseband signal to the FFT unit 123.

The FET unit 123, based on a trigger position instruction from the symbol synchronization unit 128, applies FFT operation processing to data in a prescribed section among signals supplied from the mixer 122, and supplies the resultant signal after the FFT operation to the equalization unit 124.

The equalization unit 124 is made to be a functional block which performs equalization processing in accordance with characteristics of a transmission channel based on a pilot symbol included in each OFDM symbol of an OFDM frequency-domain signal.

The FEC unit 125 performs necessary error correction decoding processing with an OFDM frequency-domain signal from the equalization unit 124 as a target. That is, the FEC unit 125 carries out de-interleave, de-punctured, Viterbi decode, spread signal removal, low density parity check (LDPC) decode and Reed-Solomon (RS) decode, for example, and outputs resultant error corrected decoded data.

The preamble detection unit 126, based on a pilot signal included in the OFDM signal outputted from the FET unit 123, detects the P1 symbol included in the head of the T2 frame, and decodes the signaling transmitted by the P1 symbol. In addition, the preamble detection unit 126, based on the P1 signaling acquired by decoding, acquires discrimination information for discriminating whether the frame is the T2 frame or the FEF. Furthermore, the preamble detection unit 126 acquires, based on the P2, the information indicating the FEF length and the FEF interval, etc., and the information necessary for the demodulation processing of the T2 frame.

The frame synchronization unit 127 acquires information related to the FEF from the error corrected decoded data outputted from the FEC unit 125, and acquires a decoding result of the P1 signaling outputted from the preamble detection unit 126. Then, the frame synchronization unit 127 is made to detect the head position of each frame with respect to the T2 frame, the T2-Lite frame, or the FEF included in the received broadcast signal.

The frame synchronization unit 127 supplies AGC control information for controlling operation of the AGC unit 129 to the AGC unit 129 as required at the timing when the head position of the frame is detected.

The symbol synchronization unit 128 generates FFT trigger information from the P1 positional information outputted from the preamble detection unit 126 or the FFT size, and outputs the FFT trigger information to the FFT unit 123.

The AGC unit 129 accepts supplying of the signal outputted from the RF tuner 110, and performs gain control so as to keep constant a power of the inputted OFDM signal. The AGC unit 129 supplies a gain specified based on the signal outputted from the RF tuner 110 to the IF amplifier 114.

In addition, when a gain holding flag is included in the AGC control information supplied from the frame synchronization unit 127, the AGC unit 129 is made to keep constant a gain value to be supplied to the IF amplifier 114.

Furthermore, when initial gain information is included in the AGC control information supplied from the frame synchronization unit 127, the AGC unit 129 is made to change an initial value of the gain supplied to the IF amplifier 114 based on the initial gain information.

In addition, when time constant information is included in the AGC control information supplied from the frame synchronization unit 127, the AGC unit 129 is made to change a time constant for specifying a time interval at which a gain supplied to the IF amplifier 114 is calculated, based on the time constant information. Note that, the larger the time constant is, the slower a tracking speed of a gain change with respect to the power of the signal outputted from the RF tuner 110 becomes, and the smaller the time constant is, the faster a tracking speed of a gain change with respect to the power of the signal outputted from the RF tuner 110 becomes.

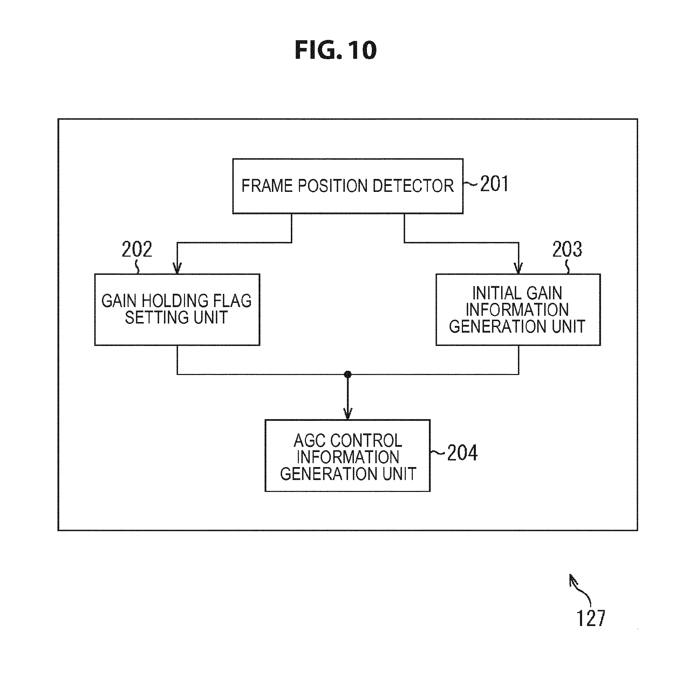

FIG. 10 is a block diagram illustrating a detailed configuration example of the frame synchronization unit 127 of FIG. 9. In an example of FIG. 10, the frame synchronization unit 127 includes a frame position detector 201, a gain holding flag setting unit 202, an initial gain information generation unit 203, and an AGC control information generation unit 204.

The frame position detector 201 detects the head position of each frame with respect to the T2 frame, the T2-Lite frame or the FEF.

The gain holding flag setting unit 202, based on a detection result of the frame position detector 201, generates information indicating whether to set the gain holding flag for keeping constant a gain supplied from the AGC unit 129, and outputs the information to the AGC control information generation unit 204.

The initial gain information generation unit 203, based on the detection result of the frame position detector 201, generates information specifying an initial value of the gain supplied from the AGC unit 129, and outputs the information to the AGC control information generation unit 204. Note that, the initial value of the gain is assumed to be calculated in advance based on conditions of a transmission line, etc., as the optimum gain for demodulating a signal of a desired profile, for example.

The AGC control information generation unit 204 is made to generate and output the AGC control information, based on the information outputted from the gain holding flag setting unit 202 and the initial gain information generation unit 203.

For example, the T2 frame and the T2-Lite frame exist in a mixed manner in the broadcast signal, and the receiving device 100 is assumed to perform reception and demodulation of the T2-Lite profile to output the error corrected decoded data.

In this case, for example, when the frame position detector 201 detects the head position of the first T2-Lite frame, the initial gain information generation unit 203 generates the initial gain information specifying the initial value of the gain supplied from the AGC unit 129. Then, the AGC control information generation unit 204 generates the AGC control information including the initial gain information to output the AGC control information to the AGC unit 129.

In addition, when the frame position detector 201 detects the head position of the T2 frame, the gain holding flag setting unit 202 generates information to the effect that a gain holding flag is set. Then, the AGC control information generation unit 204 generates the AGC control information including the gain holding flag to output the AGC control information to the AGC unit 129.

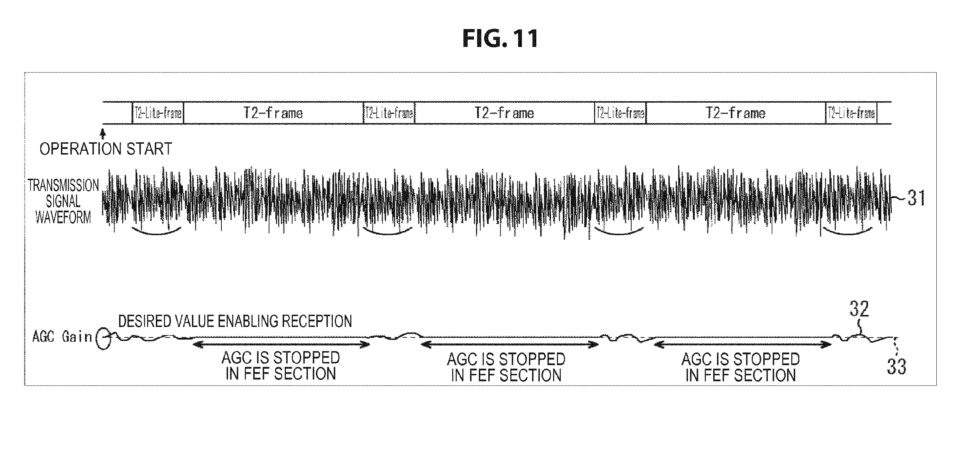

FIG. 11 illustrates the transmission signal at this time, and the gain set by the AGC. Note that, each of small rectangles illustrated in the top in FIG. 11 denotes the frame of the broadcast signal which conforms with the DVB-T2 standard.

In FIG. 11, a line 31 illustrates a waveform of the transmission signal (broadcast signal) transmitted to the receiving device from the broadcasting station. A line 32 illustrates a waveform of a gain value set by the AGC of the receiving device. A dotted line 33 illustrates a gain value suitable for performing reception and demodulation of the T2-Lite frame of the broadcast signal.

These waveforms, in which the horizontal axis represents time, are made to be waveforms synchronized with a time indicated by a rectangle denoting the T2 frame or the T2-Lite frame illustrated in the top in FIG. 11.

As described above, when the T2 frame and the T2-Lite frame exist in a mixed manner, the receiving device which performs reception and demodulation of the T2-Lite profile and outputs the error corrected decoded data will carry out processing while regarding the T2 frame as the FEF. That is, at the time corresponding to the head position of the T2 frame, the gain holding flag is set in the AGC unit 129 based on the AGC control information.

However, in the case of FIG. 11, at the time corresponding to the head position of the leftmost T2-Lite frame in FIG. 11, the initial value of the gain is set in the AGC unit 129 based on the AGC control information. Thereby, in the case of FIG. 11, for example, even when the T2 section is very long compared with the T2-Lite section unlike the case of FIG. 8, the reception and demodulation of the T2-Lite profile can be performed promptly.

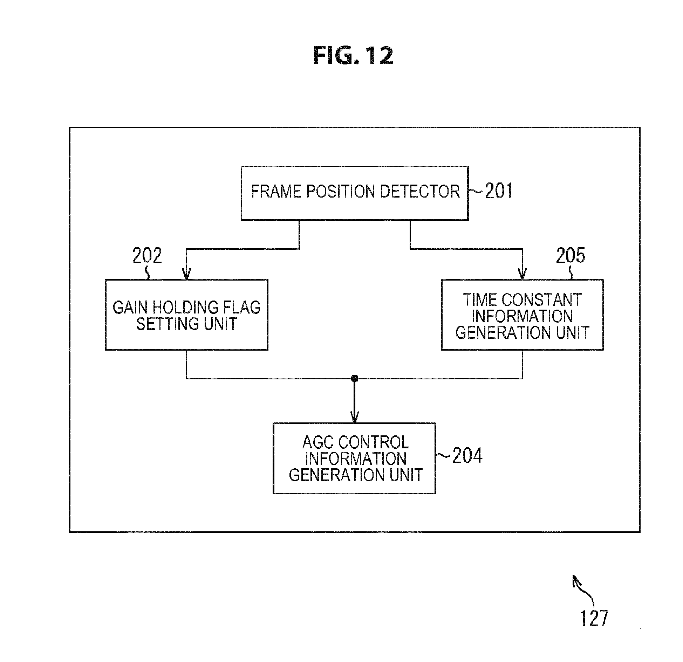

FIG. 12 is a block diagram illustrating another detailed configuration example of the frame synchronization unit 127 of FIG. 9. In an example of FIG. 12, the frame synchronization unit 127 includes the frame position detector 201, the gain holding flag setting unit 202, a time constant information generation unit 205 and the AGC control information generation unit 204.

In the case of the configuration of FIG. 12, unlike the configuration of FIG. 10, the initial gain information generation unit 203 is not provided in the frame synchronization unit 127, but the time constant information generation unit 205 is provided.

The time constant information generation unit 205 generates the time constant information according to the time constant for specifying the time interval at which the AGC unit 129 calculates the gain to be supplied to the IF amplifier 114 based on the detection result of the frame position detector 201. As described above, the larger the time constant is, the slower the tracking speed of the gain change with respect to the power of the signal outputted from the RF tuner 110 becomes, and the smaller the time constant is, the faster the tracking speed of the gain change with respect to the power of the signal outputted from the RF tuner 110 becomes.

Because other configurations are the same as those of the case of FIG. 10, detailed description is omitted.

For example, the T2 frame and the T2-Lite frame exist in a mixed manner in the broadcast signal, and the receiving device 100 is assumed to perform reception and demodulation of the T2-Lite profile to output the error corrected decoded data.

In this case, for example, when the frame position detector 201 detects the head position of the first T2-Lite frame, the time constant information generation unit 205 generates the time constant information for changing a value of the time constant into a small value. Then, the AGC control information generation unit 204 generates the AGC control information including the time constant information to output the AGC control information to the AGC unit 129.

In addition, when the frame position detector 201 detects the head position of the T2 frame, the gain holding flag setting unit 202 generates the information to the effect that the gain holding flag is set. Then, the AGC control information generation unit 204 generates the AGC control information including the gain holding flag to output the AGC control information to the AGC unit 129.

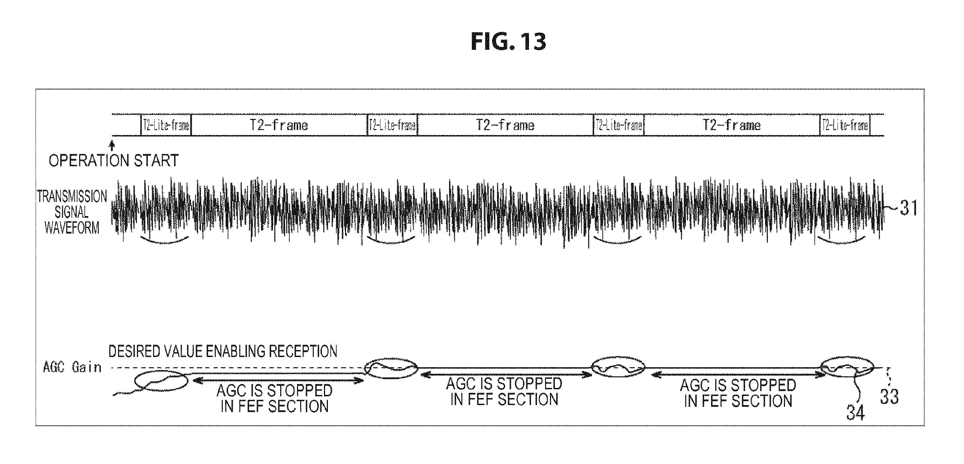

FIG. 13 illustrates the transmission signal at this time, and the gain set by the AGC. Note that, each of small rectangles illustrated in the top in FIG. 11 denotes the frame of the broadcast signal which conforms with the DVB-T2 standard.

In FIG. 13, the line 31 illustrates a waveform of the transmission signal (broadcast signal) transmitted to the receiving device from the broadcasting station. A line 34 illustrates a waveform of a gain value set by the AGC of the receiving device. The dotted line 33 illustrates the gain value suitable for performing reception and demodulation of the T2-Lite frame of the broadcast signal.

These waveforms, in which the horizontal axis represents time, are made to be waveforms synchronized with the time indicated by the rectangle denoting the T2 frame or the T2-Lite frame illustrated in the top in FIG. 13.

As described above, when the T2 frame and the T2-Lite frame exist in a mixed manner, the receiving device which performs reception and demodulation of the T2-Lite profile will carry out processing while regarding the T2 frame as the FEF. That is, at the time corresponding to the head position of the T2 frame, the gain holding flag is set in the AGC unit 129 based on the AGC control information.

However, in the case of FIG. 13, at the time corresponding to the head position of the leftmost T2-Lite frame in FIG. 13, the time constant set in the AGC unit 129 based on the AGC control information is changed into a small value. Thereby, the tracking speed of the gain change with respect to the power of the signal outputted from the RF tuner 110 becomes fast.

In addition, for example, after the gain value set by the AGC reaches the gain value illustrated by the dotted line 33, at the time corresponding to the head position of the T2-Lite frame, the time constant set in the AGC unit 129 based on the AGC control information may be made to be controlled so as not to be changed into a small value.

Therefore, in the case of FIG. 13, even when the T2 section is very long compared with the T2-Lite section unlike the case of FIG. 8, for example, the reception and demodulation of the T2-Lite profile can be performed promptly.

Note that, when the head position of the T2 frame is detected after the head position of the T2-Lite frame has been detected, time constant information for restoring (enlarging) the value of the time constant may be made to be generated, and the AGC control information including the time constant information may be made to be outputted. In this case, every time the head position of the T2-Lite frame is detected, the time constant information for changing a value of the time constant into a small value is generated, and the AGC control information including the time constant information is outputted.

Alternatively, in the configuration of FIG. 12, the gain holding flag setting unit 202 may not be provided. In this case, when the frame position detector 201 detects the head position of the T2-Lite frame, the time constant information generation unit 205 may generate always the time constant information for changing a value of the time constant into a small value, and may generate always the time constant information for changing a value of the time constant into a very large (almost infinite) value when the frame position detector 201 detects the head position of the T2 frame.

When a very large time constant is set in the AGC unit 129, the tracking speed of the gain change with respect to the power of the signal outputted from the RF tuner 110 becomes very slow, and the AGC unit 129 will operate almost in the same way as the case where the gain is held.

In this way, by changing a time constant without using the gain holding flag, it is also possible that a gain value outputted from the AGC unit 129 is made to be held constant.

Alternatively, when the T2 frame and the T2-Lite frame exist in a mixed manner in the broadcast signal, and the receiving device 100 is assumed to perform reception and demodulation of the T2-Lite profile to output the error corrected decoded data, the operation of the gain holding flag setting unit 202 may be made to be stopped. In this case, the gain outputted from the AGC unit 129 during reception of the broadcast signal is not held constant, and tracking of the gain change with respect to the power of the signal outputted from the RF tuner 110 may always be performed.

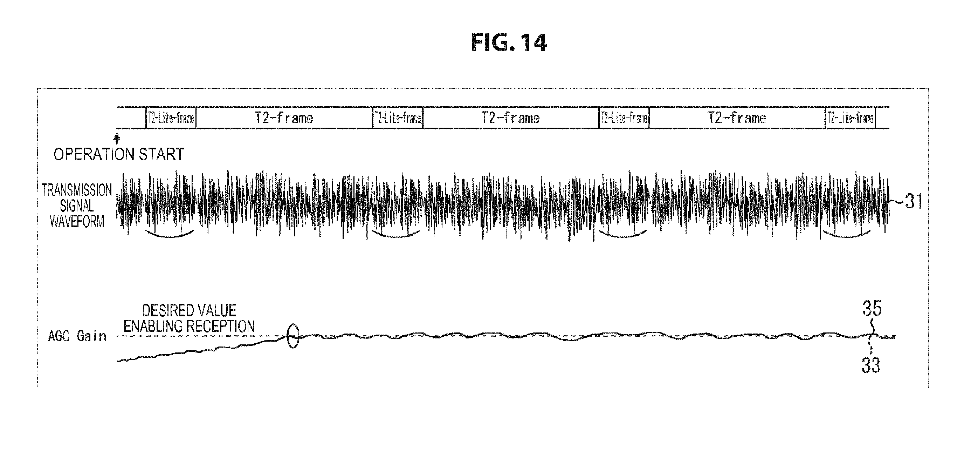

FIG. 14 illustrates the transmission signal and the gain set by the AGC in a case where an operation of the gain holding flag setting unit 202 is stopped. Note that, each of small rectangles illustrated in the top in FIG. 14 denotes the frame of the broadcast signal which conforms with the DVB-T2 standard.

In FIG. 14, the line 31 illustrates the waveform of the transmission signal (broadcast signal) transmitted to the receiving device from the broadcasting station. A line 35 illustrates a waveform of a gain value set by the AGC of the receiving device. The dotted line 33 illustrates the gain value suitable for performing reception and demodulation of the T2-Lite frame of the broadcast signal.

These waveforms, in which the horizontal axis represents time, are made to be waveforms synchronized with the time indicated by the rectangle denoting the T2 frame or the T2-Lite frame illustrated in the top in FIG. 14.

As described above, when the T2 frame and the T2-Lite frame exist in a mixed manner, the receiving device which performs reception and demodulation of the T2-Lite profile will carry out processing while regarding the T2 frame as the FEF. That is, at the time corresponding to the head position of the T2 frame, the gain holding flag is set in the AGC unit 129 based on the AGC control information.

However, in the case of FIG. 14, at the time corresponding to the head position of the T2 frame, the gain holding flag is not set in the AGC unit 129. Thereby, also during reception of the T2 frame, tracking of the gain change with respect to the power of the signal outputted from the RF tuner 110 will be performed.

Therefore, in the case of FIG. 14, even when the T2 section is very long compared with the T2-Lite section unlike the case of FIG. 8, for example, the reception and demodulation of the T2-Lite profile can be performed promptly.

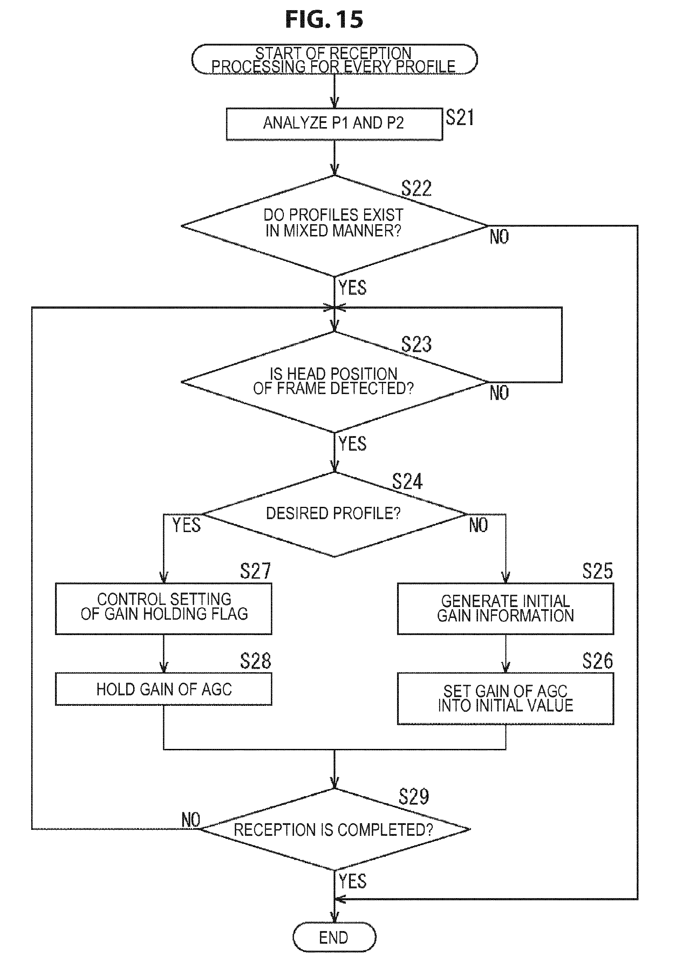

Next, with reference to a flow chart of FIG. 15, an example of reception processing for every profile according to the receiving device 100 to which the present technology is applied will be described.

This processing is executed when the T2 frame and the T2-Lite frame exist in a mixed manner in the broadcast signal, and the receiving device 100 performs reception and demodulation of either one (e.g., T2-Lite) of the profiles to output the error corrected decoded data.

In addition, the reception processing for every profile illustrated in FIG. 15 is made to be an example of processing in a case where the frame synchronization unit 127 is configured as illustrated in FIG. 10.

In Step S21, the preamble detection unit 126 analyzes the P1 and the P2. At this time, the P1 symbol included in the head of the T2 frame is detected, and the signaling transmitted by the P1 symbol is decoded. In addition, based on the P1 signaling acquired by decoding, the discrimination information for discriminating whether the frame is the T2 frame or the FEF is acquired, and furthermore, based on the P2, information indicating the FEF length and the FEF interval, etc., and information necessary for the demodulation processing of the T2 frame are acquired.

In Step S22, the frame synchronization unit 127 determines whether the T2 profile and the T2-Lite profile exist in a mixed manner. In Step S22, when it is determined that the T2 profile and the T2-Lite profile exist in a mixed manner, the process proceeds to Step S23.

In Step S23, the frame position detector 201 of the frame synchronization unit 127 determines whether the head position of the frame has been detected, and stands by until it is determined that the head position of the frame has been detected. When it is determined that the head position of the frame has been detected in Step S23, the process proceeds to Step S24.

In Step S24, the frame position detector 201 determines whether the frame is the frame of the desired profile (at present, T2-Lite frame). In Step S24, when it is determined that the frame is the frame of the desired profile, the process proceeds to Step S25.

In Step S25, the initial gain information generation unit 203 generates the initial gain information to specify the initial value of the gain supplied from the AGC unit 129. Then, the AGC control information generation unit 204 generates the AGC control information including the initial gain information to perform output to the AGC unit 129.

In Step S26, the initial value of the gain outputted from the AGC unit 129 is set as the value specified by the initial gain information generated by the process of Step S25.

On the other hand, in Step S24, when it is determined that the frame is not the frame of the desired profile, the process proceeds to Step S27.

In Step S27, the gain holding flag setting unit 202 generates the information to the effect that the gain holding flag is set. Then, the AGC control information generation unit 204 generates the AGC control information including the gain holding flag to output the AGC control information to the AGC unit 129.

In Step S28, the gain holding flag is set in the AGC unit 129, and the gain outputted from the AGC unit 129 is held constant.

After the process of Step S26 or Step S28, the process proceeds to Step S29.

In Step S29, it is determined whether the reception of the broadcast signal is completed, and when it is determined that the reception is not completed, the process returns to Step S23, and the processes following Step S23 are executed repeatedly.

When it is determined that the reception of the broadcast signal has been completed in Step S29, or when it is determined that the T2 profile and the T2-Lite profile do not exist in a mixed manner in Step S22, the process is terminated.

In this way, the reception processing for every profile is executed. Thereby, the gain set by the AGC is controlled as described above with reference to FIG. 11, for example.

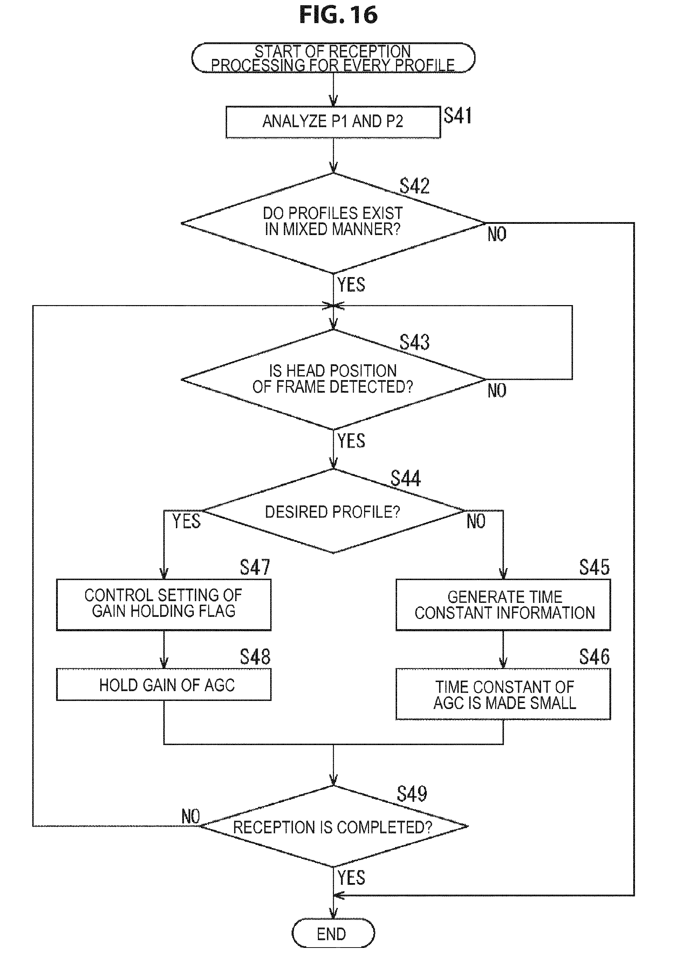

Next, with reference to a flow chart of FIG. 16, another example of the reception processing for every profile according to the receiving device 100 to which the present technology is applied will be described.

This processing is executed when the T2 frame and the T2-Lite frame exist in a mixed manner in the broadcast signal, and the receiving device 100 performs reception and demodulation of either one (e.g., T2-Lite) of the profiles to output the error corrected decoded data.

In addition, the reception processing for every profile illustrated in FIG. 16 is made to be an example of processing in a case where the frame synchronization unit 127 is set as illustrated in FIG. 12.

In Step S41, the preamble detection unit 126 analyzes the P1 and the P2. At this time, the P1 symbol included in the head of the T2 frame is detected, and the signaling transmitted by the P1 symbol is decoded. In addition, based on the P1 signaling acquired by decoding, the discrimination information for discriminating whether the frame is the T2 frame or the FEF is acquired, and furthermore, based on the P2, information indicating the FEF length and the FEF interval, etc., and information necessary for the demodulation processing of the T2 frame are acquired.

In Step S42, the frame synchronization unit 127 determines whether the T2 profile and the T2-Lite profile exist in a mixed manner. In Step S42, when it is determined that the T2 profile and the T2-Lite profile exist in a mixed manner, the process proceeds to Step S43.

In Step S43, the frame position detector 201 of the frame synchronization unit 127 determines whether the head position of the frame has been detected, and stands by until it is determined that the head position of the frame has been detected. When it is determined that the head position of the frame has been detected in Step S43, the process proceeds to Step S44.

In Step S44, the frame position detector 201 determines whether the frame is the frame of the desired profile (at present, T2-Lite frame). In Step S44, when it is determined that the frame is the frame of the desired profile, the process proceeds to Step S45.

In Step S45, the time constant information generation unit 205 generates the time constant information according to the time constant for specifying the time interval at which the AGC unit 129 calculates the gain to be supplied to the IF amplifier 114. At this time, the time constant information for setting a small value as the time constant is set.

In Step S46, a time constant of the AGC unit 129 is changed into a value corresponding to the time constant information generated by the process of Step S45.

On the other hand, in Step S44, when it is determined that the frame is not the frame of the desired profile, the process proceeds to Step S47.

In Step S47, the gain holding flag setting unit 202 generates the information to the effect that the gain holding flag is set. Then, the AGC control information generation unit 204 generates the AGC control information including the gain holding flag to output the AGC control information to the AGC unit 129.

In Step S48, the gain holding flag is set in the AGC unit 129, and the gain outputted from the AGC unit 129 is held constant.

After the process of Step S46 or Step S48, the process proceeds to Step S49.

In Step S49, it is determined whether the reception of the broadcast signal is completed, and when it is determined that the reception is not completed, the process returns to Step S43, and the processes following Step S43 are executed repeatedly.

When it is determined that the reception of the broadcast signal has been completed in Step S44, or when it is determined that the T2 profile and the T2-Lite profile do not exist in a mixed manner in Step S22, the process is terminated.

Note that, in Step S47, the time constant information for changing the value of the time constant into a very large (almost infinite) value may be made to be generated. When a very large time constant is set in the AGC unit 129, the tracking speed of the gain change with respect to the power of the signal outputted from the RF tuner 110 becomes very slow, and the AGC unit 129 will operate almost in the same way as the case where the gain is held.

In this way, the reception processing for every profile is executed. Thereby, the gain set by the AGC is controlled as described above with reference to FIG. 13, for example.

Alternatively, when the T2 frame and the T2-Lite frame exist in a mixed manner in the broadcast signal, and the receiving device 100 is assumed to perform reception and demodulation of the T2-Lite profile, an operation of the gain holding flag setting unit 202 may be made to be stopped. In this case, the gain outputted from the AGC unit 129 during reception of the broadcast signal is not held constant, and tracking of the gain change with respect to the power of the signal outputted from the RF tuner 110 may always be performed.

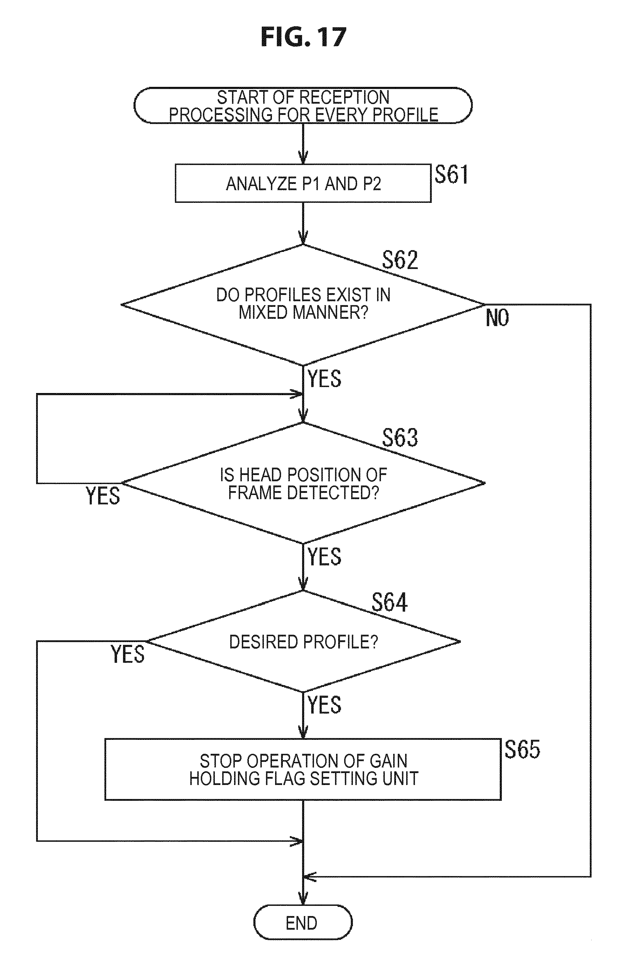

An example of the reception processing for every profile in this case is illustrated in a flow chart of FIG. 17.

In Step S61, the preamble detection unit 126 analyzes the P1 and the P2. At this time, the P1 symbol included in the head of the T2 frame is detected, and the signaling transmitted by the P1 symbol is decoded. In addition, based on the P1 signaling acquired by decoding, the discrimination information for discriminating whether the frame is the T2 frame or the FEF is acquired, and furthermore, based on the P2, information indicating the FEF length and the FEF interval, etc., and information necessary for the demodulation processing of the T2 frame are acquired.

In Step S62, the frame synchronization unit 127 determines whether the T2 profile and the T2-Lite profile exist in a mixed manner. In Step S62, when it is determined that the T2 profile and the T2-Lite profile exist in a mixed manner, the process proceeds to Step S63.

In Step S63, the frame position detector 201 of the frame synchronization unit 127 determines whether the head position of the frame has been detected, and stands by until it is determined that the head position of the frame has been detected. When it is determined that the head position of the frame has been detected in Step S63, the process proceeds to Step S64.

In Step S64, the frame position detector 201 determines whether the frame is the frame of the desired profile (at present, T2-Lite frame). In Step S64, when it is determined that the frame is the frame of the desired profile, the process proceeds to Step S65.

Note that, the process of Step S64 may be omitted, and the process may be made to proceed to Step S65 directly after the process of Step S63.

In Step S65, an operation of the gain holding flag setting unit 202 is stopped.

On the other hand, in Step S62, when it is determined that the T2 profile and the T2-Lite profile do not exist in a mixed manner, the processes of Step S63 to Step S65 are skipped.

In this way, the reception processing for every profile is executed. Thereby, the gain set by the AGC is controlled as described above with reference to FIG. 14, for example.

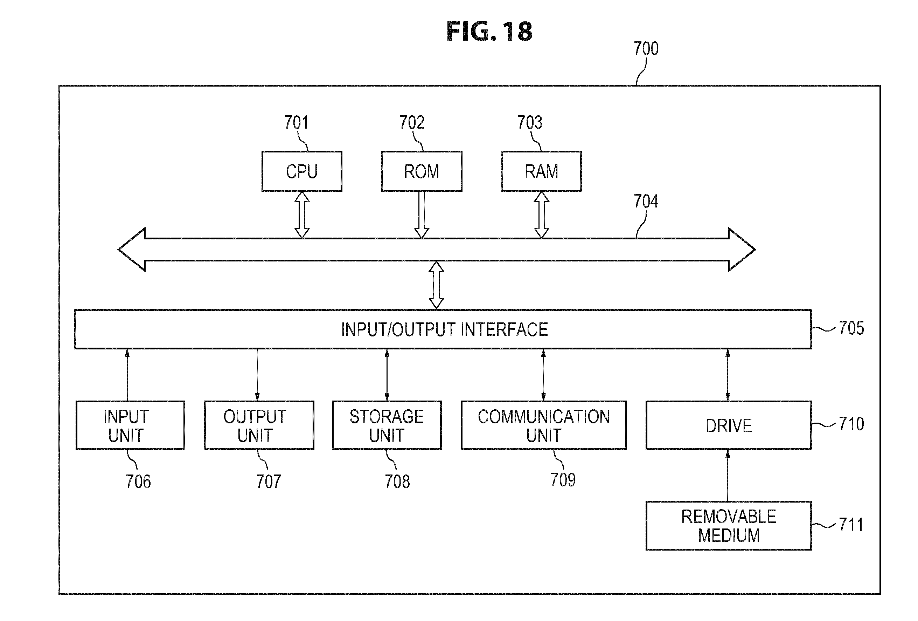

The series of processes described above can be realized by hardware or software. When the series of processes is executed by the software, a program forming the software is installed in a computer embedded in dedicated hardware and a general-purpose personal computer 700 illustrated in FIG. 18 in which various programs can be installed and various functions can be executed, through a network or a recording medium.

In FIG. 18, a central processing unit (CPU) 701 executes various processes according to a program stored in a read only memory (ROM) 702 or a program loaded from a storage unit 708 to a random access memory (RAM) 703. In the RAM 703, data that is necessary for executing the various processes by the CPU 701 is appropriately stored.

The CPU 701, the ROM 702, and the RAM 703 are connected mutually by a bus 704. Also, an input/output interface 705 is connected to the bus 704.

An input unit 706 that includes a keyboard and a mouse, an output unit 707 that includes a display composed of a liquid crystal display (LCD) and a speaker, a storage unit 708 that is configured using a hard disk, and a communication unit 709 that is configured using a modem and a network interface card such as a LAN card are connected to the input/output interface 705. The communication unit 709 executes communication processing through a network including the Internet.

A drive 710 is connected to the input/output interface 705 according to necessity, removable medium 711 such as a magnetic disk, an optical disc, a magneto optical disc, or a semiconductor memory are appropriately mounted, and a computer program that is read from the removable medium 711 is installed in the storage unit 708 according to necessity.

When the series of processes is executed by the software, a program forming the software is installed through the network such as the Internet or a recording medium composed of the removable medium 711.

The recording medium may be configured using the removable medium 711 illustrated in FIG. 18 that is composed of a magnetic disk (including a floppy disk (registered trademark)), an optical disc (including a compact disc-read only memory (CD-ROM) and a digital versatile disc (DVD)), a magneto optical disc (including a mini-disc (MD) (registered trademark)), or a semiconductor memory, which is distributed to provide a program to a user and has a recorded program, different from a device body, and may be configured using a hard disk that is included in the ROM 702 provided to the user in a state embedded in the device body in advance having a recorded program or the storage unit 708.

In the present disclosure, the series of processes includes a process that is executed in the order described, but the process is not necessarily executed temporally and can be executed in parallel or individually.

An embodiment of the disclosure is not limited to the embodiments described above, and various changes and modifications may be made without departing from the scope of the disclosure.

Additionally, the present technology may also be configured as below.

(1) A receiving device including:
   a gain supplying unit that supplies a gain for adjusting power of an intermediate frequency OFDM signal acquired from a broadcast signal received by a tuner, the broadcast signal conforming with the DVB-T2 standard and having a plurality of profiles mixed;
   a position detecting unit that detects a head position of a frame corresponding to each of the plurality of profiles; and
   a time constant changing unit that changes, in accordance with a profile of the frame, a time constant to specify a time interval at which the gain supplying unit calculates the gain based on power of the intermediate frequency OFDM signal outputted from the tuner when a head position of the frame is detected.
(2) The receiving device according to (1), further including:
   a profile determination unit that determines whether or not a frame in which the head position has been detected is a frame corresponding to a profile from which decoded data is to be outputted, wherein
   in a case where a frame in which the head position has been detected is determined to be a frame corresponding to a profile from which decoded data is to be outputted, the time constant changing unit changes a time constant of the gain supplying unit into a time constant to shorten a time interval at which the gain is calculated.
(3) The receiving device according to (2), further including:
   a gain holding control unit that carries out control so that a gain supplied from the gain supplying unit is held constant in a case where the frame in which the head position has been detected is determined not to be a frame corresponding to a profile from which decoded data is to be outputted.
(4) The receiving device according to (1), further including:
   a profile determination unit that determines whether or not a frame in which the head position has been detected is a frame corresponding to a profile from which decoded data is to be outputted; and
   an initial value setting unit that sets an initial value of a gain supplied from the gain supplying unit to a prescribed value determined in advance in a case where a frame in which the head position has been detected is determined to be a frame corresponding to a profile from which decoded data is to be outputted.
(5) The receiving device according to (4), wherein
   the initial gain setting unit sets a value suitable for demodulation of a signal of a profile from which the decoded data is to be outputted as an initial value of the gain.
(6) A receiving method of a receiving device having a gain supplying unit that supplies a gain for adjusting power of an intermediate frequency OFDM signal acquired from a broadcast signal received by a tuner, the broadcast signal conforming with the DVB-T2 standard and having a plurality of profiles mixed, the method including:
   detecting a head position of a frame corresponding to each of the plurality of profiles; and
   changing, in accordance with a profile of the frame, a time constant to specify a time interval at which the gain supplying unit calculates the gain based on power of the intermediate frequency OFDM signal outputted from the tuner when a head position of the frame is detected.
(7) A program for causing a computer to function as:
   a gain supplying unit that supplies a gain for adjusting power of an intermediate frequency OFDM signal acquired from a broadcast signal received by a tuner, the broadcast signal conforming with the DVB-T2 standard and having a plurality of profiles mixed;
   a position detecting unit that detects a head position of a frame corresponding to each of the plurality of profiles; and
   a time constant changing unit that changes, in accordance with a profile of the frame, a time constant to specify a time interval at which the gain supplying unit calculates the gain based on power of the intermediate frequency OFDM signal outputted from the tuner when a head position of the frame is detected.
(8) A receiving device including:
   a gain supplying unit that supplies a gain for adjusting power of an intermediate frequency OFDM signal acquired from the broadcast signal that is received by a tuner and conforms with the DVB-T2 standard;
   a gain holding control unit that carries out control to keep a gain constant, the gain being supplied from the gain supplying unit in an FEF section in the broadcast signal;
   a mixed existence determination unit that determines whether or not a plurality of profiles exists in a mixed manner in the broadcast signal; and
   a gain holding operation stopping unit that stops an operation of the gain holding control unit in a case where a plurality of profiles is determined to exist in a mixed manner in the broadcast signal.
(9) A receiving method of a receiving device having a gain supplying unit that supplies a gain for adjusting power of an intermediate frequency OFDM signal acquired from the broadcast signal which is received by a tuner and conforms with the DVB-T2 standard, and a gain holding control unit that carries out control to keep a gain constant, the gain being supplied from the gain supplying unit in an FEF section in the broadcast signal, the method including steps in which:
   a mixed existence determination unit determines whether or not a plurality of profiles exists in a mixed manner in the broadcast signal; and
   a gain holding operation stopping unit stops an operation of the gain holding control unit in a case where a plurality of profiles is determined to exist in a mixed manner in the broadcast signal.
(10) A program for causing a computer to function as a receiving device including:
   a gain supplying unit that supplies a gain for adjusting power of an intermediate frequency OFDM signal acquired from the broadcast signal which is received by a tuner and conforms with the DVB-T2 standard;
   a gain holding control unit that carries out control to keep a gain constant, the gain being supplied from the gain supplying unit in an FEF section in the broadcast signal;
   a mixed existence determination unit that determines whether or not a plurality of profiles exists in a mixed manner in the broadcast signal; and
   a gain holding operation stopping unit that stops an operation of the gain holding control unit in a case where a plurality of profiles is determined to exist in a mixed manner in the broadcast signal.

### Reference Signs List

- 100: Receiving device,
- 110: RF tuner,
- 111: Antenna,
- 114: IF amplifier,
- 120: Demodulation unit,
- 122: Mixer,
- 123: FFT unit,
- 124: Equalization unit,
- 125: FEC unit,
- 126: Preamble detection unit,
- 127: Frame synchronization unit,
- 128: Symbol synchronization unit,
- 129: AGC,
- 140: MPEG decoder

## Claims

1. A receiving device comprising:
a gain supplying unit that supplies a gain for adjusting power of an intermediate frequency OFDM signal acquired from a broadcast signal received by a tuner, the broadcast signal conforming with the DVB-T2 standard and having a plurality of profiles mixed;
a position detecting unit that detects a head position of a frame corresponding to each of the plurality of profiles; and
a time constant changing unit that changes, in accordance with a profile of the frame, a time constant to specify a time interval at which the gain supplying unit calculates the gain based on power of the intermediate frequency OFDM signal outputted from the tuner when a head position of the frame is detected.

2. The receiving device according to claim 1, further comprising:
a profile determination unit that determines whether or not a frame in which the head position has been detected is a frame corresponding to a profile from which decoded data is to be outputted, wherein
in a case where a frame in which the head position has been detected is determined to be a frame corresponding to a profile from which decoded data is to be outputted, the time constant changing unit changes a time constant of the gain supplying unit into a time constant to shorten a time interval at which the gain is calculated.

3. The receiving device according to claim 2, further comprising:
a gain holding control unit that carries out control so that a gain supplied from the gain supplying unit is held constant in a case where the frame in which the head position has been detected is determined not to be a frame corresponding to a profile from which decoded data is to be outputted.

4. The receiving device according to claim 1, further comprising:
a profile determination unit that determines whether or not a frame in which the head position has been detected is a frame corresponding to a profile from which decoded data is to be outputted; and
an initial value setting unit that sets an initial value of a gain supplied from the gain supplying unit to a prescribed value determined in advance in a case where a frame in which the head position has been detected is determined to be a frame corresponding to a profile from which decoded data is to be outputted.

5. The receiving device according to claim 4, wherein
the initial gain setting unit sets a value suitable for demodulation of a signal of a profile from which the decoded data is to be outputted as an initial value of the gain.

6. A receiving method of a receiving device having a gain supplying unit that supplies a gain for adjusting power of an intermediate frequency OFDM signal acquired from a broadcast signal received by a tuner, the broadcast signal conforming with the DVB-T2 standard and having a plurality of profiles mixed, the method comprising:
detecting a head position of a frame corresponding to each of the plurality of profiles; and
changing, in accordance with a profile of the frame, a time constant to specify a time interval at which the gain supplying unit calculates the gain based on power of the intermediate frequency OFDM signal outputted from the tuner when a head position of the frame is detected.

7. A program for causing a computer to function as:
a gain supplying unit that supplies a gain for adjusting power of an intermediate frequency OFDM signal acquired from a broadcast signal received by a tuner, the broadcast signal conforming with the DVB-T2 standard and having a plurality of profiles mixed;
a position detecting unit that detects a head position of a frame corresponding to each of the plurality of profiles; and
a time constant changing unit that changes, in accordance with a profile of the frame, a time constant to specify a time interval at which the gain supplying unit calculates the gain based on power of the intermediate frequency OFDM signal outputted from the tuner when a head position of the frame is detected.

8. A receiving device comprising:
a gain supplying unit that supplies a gain for adjusting power of an intermediate frequency OFDM signal acquired from the broadcast signal that is received by a tuner and conforms with the DVB-T2 standard;
a gain holding control unit that carries out control to keep a gain constant, the gain being supplied from the gain supplying unit in an FEF section in the broadcast signal;
a mixed existence determination unit that determines whether or not a plurality of profiles exists in a mixed manner in the broadcast signal; and
a gain holding operation stopping unit that stops an operation of the gain holding control unit in a case where a plurality of profiles is determined to exist in a mixed manner in the broadcast signal.

9. A receiving method of a receiving device having a gain supplying unit that supplies a gain for adjusting power of an intermediate frequency OFDM signal acquired from the broadcast signal which is received by a tuner and conforms with the DVB-T2 standard, and a gain holding control unit that carries out control to keep a gain constant, the gain being supplied from the gain supplying unit in an FEF section in the broadcast signal, the method comprising steps in which:
a mixed existence determination unit determines whether or not a plurality of profiles exists in a mixed manner in the broadcast signal; and
a gain holding operation stopping unit stops an operation of the gain holding control unit in a case where a plurality of profiles is determined to exist in a mixed manner in the broadcast signal.

10. A program for causing a computer to function as a receiving device comprising:
a gain supplying unit that supplies a gain for adjusting power of an intermediate frequency OFDM signal acquired from the broadcast signal which is received by a tuner and conforms with the DVB-T2 standard;
a gain holding control unit that carries out control to keep a gain constant, the gain being supplied from the gain supplying unit in an FEF section in the broadcast signal;
a mixed existence determination unit that determines whether or not a plurality of profiles exists in a mixed manner in the broadcast signal; and
a gain holding operation stopping unit that stops an operation of the gain holding control unit in a case where a plurality of profiles is determined to exist in a mixed manner in the broadcast signal.
